# EUROPÄISCHE PATENTANMELDUNG

(11) **EP 1 075 919 A2**
(43) Veröffentlichungstag der Anmeldung: **14.02.2001**
(21) Anmeldenummer: 00106771.9
(22) Anmeldetag: 30.03.2000
(51) Int. Cl.: B29C 33/22, B29C 49/56

(54) **Verfahren und Vorrichtung zum Schliessen und Öffnen des Werkzeugs einer Kunststoffverarbeitungsmaschine**

(30) Priorität: 14.07.1999 DE 19932741
(71) Anmelder: Fischer-W. Müller Blasformtechnik GmbH, 53842 Troisdorf (DE)
(72) Erfinder: Stocksiefen, Raimund, 53844 Troisdorf (DE)
(74) Vertreter: Valentin, Ekkehard, Dipl.-Ing.

(57) **Zusammenfassung**

Um das Verfahren zum Schließen und Öffnen des Werkzeugs einer Kunststoffverarbeitungsmaschine, insbesondere einer Blasformmaschine, mit einem mindestens zweiteiligen Werkzeug (4, 5), das von mindestens zwei Werkzeugaufspannplatten (1, 2) getragen wird, die mittels Antriebsmitteln aus einer offenen Entform-Position in eine geschlossene Arbeitsposition und umgekehrt bewegt werden, zu elektrifizieren bei insgesamt baulich kleiner und unkomplizierter Konstruktion, sollen beim Schließvorgang die Werkzeugaufspannplatten (1, 2) aus der offenen Entform-Position mittels einer über einen ersten elektrischen Motor (18) angetriebenen Spindel (19) über einen großen Hub bei relativ geringer Kraft und relativ hoher Geschwindigkeit (Eilgang) bis in die nahezu geschlossene Arbeitsposition bewegt werden und die Werkzeugaufspannplatten (1, 2) in die vollständig geschlossene Arbeitsposition mittels eines zweiten, ebenfalls auf die Antriebsspindel wirkenden elektrischen Motors (23) über einen kleinen Hub bei relativ großer Kraft (Schließbewegung) bewegt werden, während der die Bewegung nicht durchführende Antrieb abgebremst wird.

## Beschreibung

Die Erfindung betrifft ein Verfahren zum Schließen und Öffnen des Werkzeugs einer Kunststoffverarbeitungsmaschine, insbesondere einer Blasformmaschine, mit einem mindestens zweiteiligen Werkzeug, das von mindestens zwei Werkzeugaufspannplatten getragen wird, die mittels Antriebsmitteln aus einer offenen Entform-Position in eine geschlossene Arbeitsposition und umgekehrt bewegt werden. Des weiteren betrifft die Erfindung eine Vorrichtung zur Durchführung des Verfahrens.

Bei derartigen gattungsgemäßen Werkzeug-Schließverfahren bei Kunststoffverarbeitungsmaschinen wird der Werkzeughub zum Schließen in zwei Bereiche aufgeteilt. In einem ersten Bereich werden die beiden Werkzeughälften mit relativ geringer Kraft von der Entform-Position (Offen-Position) auf die Schließ- bzw. Arbeitsposition zubewegt, wobei typischerweise über 90% des gesamten Hubes zurückgelegt werden. In dem zweiten Bereich bringen Schließantriebe die hohe Werkzeugschließkraft auf, um die Abquetschkraft des Blasform-Vorformlings und die Zuhaltekraft gegen den Blasdruck aufzubringen.

Bei den bekannten Schließvorrichtungen sind die Antriebe für die Fahrbewegung, oder den sogenannten Eilgang, und die Schließbewegung getrennt. So ist beispielsweise aus der EP 0 740 995 A2 eine Vorrichtung zum Schließen des Werkzeugs einer Kunststoffblasformmaschine bekannt mit einem separaten Fahrantrieb und separaten Schließantrieben. Bei den Schließantrieben handelt es sich um hydraulische Kolben-Zylinder-Systeme, der Fahrantrieb wird mittels eines Langhubzylinders geringer Kolbenflache bewerkstelligt. Neben diesen hydraulischen Systemen mit den bekannten Nachteilen in Konstruktion und Wartung sind auch Schließverfahren bekannt, in denen mehrere Spindel-Mutter-Antriebe eingesetzt werden.

Ausgehend von dieser Problematik liegt nun der Erfindung die Aufgabe zugrunde, ein Werkzeugschließverfahren und eine entsprechende Vorrichtung zu schaffen unter Verwendung von rein elektrischen Antriebsmitteln bei insgesamt baulich kleiner und unkomplizierter Konstruktion.

Diese Aufgabe wird mittels des Verfahrens mit den Merkmalen des Anspruchs 1 und mittels der Vorrichtung mit den Merkmalen des Anspruchs 6 gelöst. Vorteilhafte Ausgestaltungen der Erfindung sind in den Unteransprüchen offenbart.

Gemäß der Erfindung erfolgt die Bewegung sowohl des Eilgangs als auch die Schließbewegung mittels eines einzigen Spindel-Mutter-Systems, das von zwei Motoren wahlweise getrennt oder auch während des Eilgangs gleichzeitig angetrieben wird. Die Auftrennung in zwei Antriebsmotoren bietet den Vorteil, daß die Baugröße der beiden Motoren nicht zu groß wird, was bei der Verwendung nur eines Direktantriebs für die Spindel, der dann sowohl für die geschwindigkeitsorientierte Fahrbewegung und die kraftorientierte Schließbewegung ausgelegt sein müßte, nicht möglich ist. Ein für beide Komponenten ausgelegter Direktmotor würde insgesamt zu groß sein.

Verfahrensgemäß wird im einzelnen vorgeschlagen, daß beim Schließvorgang die Werkzeugaufspannplatten aus der offenen Entform-Position mittels der über den ersten elektrischen Motor angetriebenen Spindel über einen großen Hub bei relativ geringer Kraft und relativ hoher Geschwindigkeit (Eilgang) bis in die nahezu geschlossene Arbeitsposition bewegt werden, und daß die Werkzeugaufspannplatten in die vollständig geschlossene Arbeitsposition mittels des zweiten, ebenfalls auf die Antriebsspindel wirkenden elektrischen Motors über einen kleinen Hub bei relativ großer Kraft (Schließbewegung) bewegt werden, während der die Bewegung nicht durchführende Antrieb abgebremst wird.

Ermöglicht wird dieses Verfahren vorrichtungsgemäß dadurch, daß als Fahrantrieb zur Bewegung der Werkzeugaufspannplatten über einen großen Hub bei relativ geringer Kraft und relativ hoher Geschwindigkeit in die annähernd geschlossene Arbeitsposition ein erster elektrischer Motor vorgesehen ist, der die Gewindespindel, die eine Mutter aufweist, antreibt, daß als Schließantrieb zur Bewegung der Werkzeugaufspannplatten über einen kleinen Hub bei relativ großer Kraft in die vollständig geschlossene Position ein zweiter elektrischer Motor vorgesehen ist, der über den Antrieb der Mutter ebenfalls in Wirkverbindung mit der Antriebsspindel steht, und daß die beiden Motoren jeweils eine Bremseinrichtung aufweisen, die so betätigbar ist, daß der Motor, der die Bewegung nicht antriebt, abgebremst ist, wobei der Durchmesser der Antriebsspindel in Anpassung an die bei der Schließbewegung zu übertragende Kraft ausgelegt ist.

Der Eilgang kann allein durch den ersten Motor, die Schließbewegung allein durch den zweiten Motor bewerkstelligt werden. Während des Eilgangs ist demnach der zweite Motor abgebremst. Um einen fließenden Übergang zwischen Eilgang und kraftorientierter Schließbewegung zu schaffen, wird bereits während des Abbremsens des ersten Motors die Bremse des zweiten Motors gelöst. Es ist ebenfalls denkbar, daß der erste Motor erst abgebremst wird und anschließend die Bremse des zweiten Motors gelöst wird, wobei es dann insgesamt zu einer kurzzeitigen Unterbrechung zwischen Eilgang und Schließbewegung kommt.

Bei einer besonders bevorzugten Ausführungsform wird zur Erhöhung der Geschwindigkeit während des Eilgangs die Fahrbewegung sowohl von dem ersten Motor als auch von dem zweiten Motor bewerkstelligt. Insgesamt werden vorrichtungsgemäß sowohl die Spindel als auch die Mutter angetrieben. Kurz vor bzw. bei Erreichen der nahezu geschlossenen Arbeitsposition wird der erste Motor abgebremst, und die Schließbewegung wird allein mittels des zweiten Motors aufgebracht.

Als besonders vorteilhaft erweist es sich, wenn die beiden Motoren nach Verfahren der Werkzeugaufspannplatten in die vollständig geschlossene Arbeitsposition während des Blasvorgangs ausgeschaltet werden. Dies garantiert ein Abkühlen der insbesondere durch das Bremsen belasteten Motoren.

Die auszulegende Leistung der beiden Motoren orientiert sich bei dem ersten Motor nach der notwendigen Vorschubgeschwindigkeitskomponente, bei dem zweiten nach der aufzubringenden Kraftkomponente. Insgesamt haben beide Motoren eine im Verhältnis zu einem nur auf die Spindel wirkenden Direktantrieb kleinere Baugröße, weil jeweils eine Komponente wegfällt. Dies erklärt sich daraus, daß die Leistung des Motors abhängig ist von der Drehzahl der Spindel, der Steigung des Gewindes, wobei die Geschwindigkeit drehzahl- und steigungsabhängig ist, und der aufzubringenden Kraft. Grundsätzlich ist das Maß des Spindeldurchmessers an der aufzunehmenden Kraft zu orientieren, da die Kraft die bestimmende Größe für den Durchmesser ist, damit die gewünschte Lebensdauer der Spindel erreicht wird. Herstellerbedingt ist vorgegeben, daß das Produkt aus Durchmesser und kritischer Drehzahl einen bestimmten Faktor nicht überschreiten darf, um die gewünschte Spindellebensdauer zu erreichen. Somit ist konstruktionsmäßig auch die maximale Drehzahl und folglich die maximale Geschwindigkeit der Spindel festgelegt, nach der der erste Antrieb ausgelegt wird.

Wie bereits oben hergeleitet, ist der erste Motor geschwindigkeitsorientiert ausgelegt, während der zweite Motor kraftorientiert ausgelegt ist, d.h. mit einem Übersetzungsverhältnis größer 1.

Als besonders vorteilhafte Ausführungsform für das Spindel-Mutter-System wird der Einsatz eines Gewinderollenschraubtriebs vorgeschlagen. Hierbei ist die Mutter auf Rollen gelagert. Diese besondere Spindelart schafft es, sowohl die Anforderungen an die aufzubringende hohe Geschwindigkeit als auch die Anforderungen bei der nachfolgenden Bewegung mit hoher Kraftaufbringung bei geringer Geschwindigkeit zu erfüllen, Im allgemeinen werden nämlich hohe Vorschubgeschwindigkeiten mit großen Drehzahlen erreicht, was durch Spindeln mit kleinem Durchmesser begünstigt wird. Im Gegensatz hierzu wird die Kraftübertragung durch einen größeren Spindeldurchmesser begünstigt, was sich wiederum nachteilig auf die Geschwindigkeitsübertragung auswirkt.

Weitere Einzelheiten und Vorteile der Erfindung ergeben sich aus der nachfolgenden Beschreibung, in der ein Ausführungsbeispiel des Gegenstandes der Erfindung näher erläutert wird.

Die Blasformmaschine besitzt zwei auf einem gemeinsamen Grundrahmen 3 bewegliche Werkzeugaufspannplatten 1, 2. Jede dieser Platten 1, 2 trägt eine Werkzeughälfte 4, 5 eines Blasformwerkzeugs. Nicht dargestellt ist ein Speicherkopf oder dergleichen, der Blasform-Vorformlinge herstellt und diese von oben in den Werkzeugbereich abgibt, wo sie durch den Blasformvorgang in bekannter Weise weiterverarbeitet werden. Zum Blasformen einerseits und zum Entformen des fertigen Werkstücks andererseits sind die Werkzeugaufspannplatten 1, 2 auf dem Grundrahmen 3 verschiebbar angeordnet und werden auf- und zubewegt. Hierzu weist der Grundrahmen Führungsschienen 6, 7 mit entsprechenden entlang der Führungsschiene verfahrbaren Elementen 8,9 sowie 10, 11 auf, die mit den beiden Werkzeugaufspannplatten 1, 2 verbunden sind.

Der Grundrahmen 3 selbst ist auf zwei Lagern 12, 13 gelagert. Die beiden Werkzeugaufspannplatten 1, 2 stehen jeweils über einen kleinen und größeren Hebel 14, 15 bzw. 16, 17, wobei der größere schwenkbar an dem Grundrahmen 3 befestigt ist, mit dem Spindel-Mutter-Antrieb in Wirkverbindung. Hierzu ist der erste Hebel 17 der ersten Werkzeugaufspannplatte 2 an einer ersten Motoreinheit 18 arretiert. Der Motor 18 treibt die Spindel 19 über eine Kupplung an. Die Spindel 19 ist mit einer Mutter 20 versehen, die in einem Gehause 21 drehbar gelagert (22) ist. An dem anderen Ende des Gehäuses ist der zweite Hebel 16 der zweiten Werkzeugaufspannplatte 1 befestigt. Die Mutter 20 wird von dem zweiten elektrischen Servomotor 23 angetrieben. Bei dem gezeigten Ausführungsbeispiel ist zur Übertragung des Motorantriebs ein Zahnriemengetriebe 24 vorgesehen. Andere Arten bekannter Getriebe sind ebenfalls denkbar.

Nachfolgend wird die Funktion der beiden Antriebe 18, 23 für den Gewinderollenschraubtrieb 19 zur Bewerkstelligung der Fahrbewegung bei hoher Geschwindigkeit (Eilgang) und der Schließbewegung bei hoher Kraft beschrieben. Die Fahrbewegung von der vollständig geöffneten Position des Werkzeugs bis in die annähernd geschlossene Position wird durch die von dem ersten elektrischen Servomotor 18 angetriebene Spindel bewerkstelligt, wobei gleichzeitig der die Mutter 20 antreibende Servomotor 23 abgebremst wird. Kurz vor Erreichen der annähernd geschlossenen Position des Werkzeugs wird die Bremse des zweiten Motors 23 gelöst und der erste Motor 18 abgebremst. Die Mutter 20 beginnt sich auf der immer langsamer werdenden Spindel zu drehen. Der Motor 23 ist dabei so ausgelegt, daß die notwendige Kraft zum endgültigen Schließen des Werkzeugs aufgebracht wird.

Um die Geschwindigkeit während des Eilgangs zu erhöhen, kann die Fahrbewegung zusätzlich mittels des ersten elektrischen Servomotors (18) auch mittels des zweiten elektrischen Servomotors (23) bewerkstelligt werden, wobei der erste Motor kurz vor oder beim Übergang zur kraftausgelegten Schließbewegung abgebremst wird.

Zum Öffnen des Werkzeugs kann das erfindungsgemäße Verfahren analog angewendet werden. Da beim Öffnen des Werkzeugs allerdings keine Abquetschkraft des Blasform-Vorformlings bzw. die Zuhaltekraft gegen den Blasdruck aufgebracht werden muß, kann die Öffnungsbewegung auch allein mittels des geschwindigkeitsorientiert ausgelegten ersten elektrischen Servomotor 18 bewerkstelligt werden.

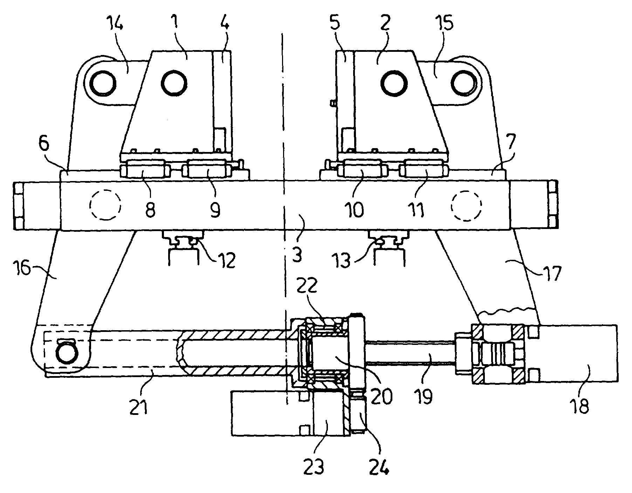

## Patentansprüche

1. Verfahren zum Schließen und Öffnen des Werkzeugs einer Kunststoffverarbeitungsmaschine, insbesondere einer Blasformmaschine, mit einem mindestens zweiteiligen Werkzeug (4, 5), das von mindestens zwei Werkzeugaufspannplatten (1, 2) getragen wird, die mittels Antriebsmitteln aus einer offenen Entform-Position in eine geschlossene Arbeitsposition und umgekehrt bewegt werden,
**dadurch gekennzeichnet**,
daß beim Schließvorgang die Werkzeugaufspannplatten (1, 2) aus der offenen Entform-Position mittels einer über einen ersten elektrischen Motor (18) angetriebenen Spindel (19) über einen großen Hub bei relativ geringer Kraft und relativ hoher Geschwindigkeit (Eilgang) bis in die nahezu geschlossene Arbeitsposition bewegt werden, und daß die Werkzeugaufspannplatten (1, 2) in die vollständig geschlossene Arbeitsposition mittels eines zweiten, ebenfalls auf die Antriebsspindel wirkenden elektrischen Motors (23) über einen kleinen Hub bei relativ großer Kraft (Schließbewegung) bewegt werden, während der die Bewegung nicht durchführende Antrieb abgebremst wird.

2. Verfahren nach Anspruch 1,
**dadurch gekennzeichnet**,
daß während des Eilgangs der zweite Motor (23) abgebremst wird, daß bei Erreichen der nahezu geschlossenen Arbeitsposition der erste Motor (18) abgebremst wird und erst anschließend die Bremse des zweiten Motors (23) gelöst wird.

3. Verfahren nach Anspruch 1,
**dadurch gekennzeichnet,**
daß während des Eilgangs der zweite Motor (23) abgebremst wird und daß schon kurz vor Erreichen der nahezu geschlossenen Arbeitsposition der erste Motor (18) abgebremst wird, während bereits die Bremse des zweiten Motors (23) gelöst wird.

4. Verfahren nach Anspruch 1,
**dadurch gekennzeichnet**,
daß die Spindel für den Eilgang zusatzlich mittels des zweiten elektrischen Motors (23) angetrieben wird und der erste Motor (18) kurz vor bzw. bei Erreichen der nahezu geschlossenen Arbeitsposition abgebremst wird.

5. Verfahren nach Anspruch 1,
**dadurch gekennzeichnet**,
daß nach Verfahren der Werkzeugaufspannplatten in die vollständig geschlossene Arbeitsposition während des Blasvorgangs die beiden Motoren (18, 23) ausgeschaltet werden.

6. Vorrichtung zum Schließen und Öffnen des Werkzeugs einer Kunststoffverarbeitungsmaschine, insbesondere einer Blasformmaschine, mit einem mindestens zweiteiligen Werkzeug, das von mindestens zwei Werkzeugaufspannplatten getragen wird, die mittels Antriebsmitteln aus einer offenen Entform-Position in eine geschlossene Arbeitsposition und umgekehrt bewegt werden,
**dadurch gekennzeichnet**,
daß als Fahrantrieb zur Bewegung der Werkzeugaufspannplatten (1, 2) über einen großen Hub bei relativ geringer Kraft und relativ hoher Geschwindigkeit in die annähernd geschlossene Arbeitsposition ein erster elektrischer Motor (18) vorgesehen ist, der eine eine Mutter (20) aufweisende Gewindespindel (19) antreibt, daß als Schließantrieb zur Bewegung der Werkzeugaufspannplatten (1, 2) über einen kleinen Hub bei relativ großer Kraft in die vollständig geschlossene Position ein zweiter elektrischer Motor (23) vorgesehen ist, der über den Antrieb der Mutter ebenfalls in Wirkverbindung mit der Antriebsspindel steht, und daß die beiden Motoren jeweils eine Bremseinrichtung aufweisen, die so betätigbar ist, daß der Motor, der die Bewegung nicht antriebt, abgebremst ist, wobei der Durchmesser der Antriebsspindel in Anpassung an die bei der Schließbewegung zu übertragende Kraft ausgelegt ist.

7. Vorrichtung nach Anspruch 6,
**dadurch gekennzeichnet,**
daß der erste Motor (18) geschwindigkeitsorientiert ausgelegt und der zweite Motor (23) kraftorientiert ausgelegt ist.

8. Vorrichtung nach Anspruch 6,
**dadurch gekennzeichnet**,
daß es sich bei der Antriebsspindel um einen Gewinderollenschraubtrieb (19) handelt.

9. Vorrichtung nach Anspruch 6,
**dadurch gekennzeichnet**,
daß die erste und zweite Werkzeugaufspannplatte (1, 2) jeweils einen Hebel (16, 17) aufweisen, die schwenkbar auf einem für die beiden Werkzeugaufspannplatten gemeinsamen Grundrahmen (3) gelagert sind, wobei der erste Hebel (17) mit der die Antriebsspindel antreibenden ersten elektrischen Servomotoreinheit (18) verbunden ist, daß die Spindel (19) mit einer Mutter (20) versehen ist, die in einem Gehäuse (21) drehbar gelagert ist, daß an dem anderen Ende des Gehäuses (21) der zweite Hebel (16) der zweiten Werkzeugaufspannplatte (1) befestigt ist und daß die Mutter (20) von dem zweiten elektrischen Servomotor (23) angetrieben wird.
